# EUROPEAN PATENT APPLICATION

(11) **EP 4 842 030 A1**
(43) Date of publication of application: **18.11.2026**
(21) Application number: 25305695.6
(22) Date of filing: 15.05.2025
(51) Int. Cl.: H04W 12/084, H04L 9/40, H04L 9/32, G06N 20/00

(54) **IDENTITY MANAGEMENT OF AI AGENTS AND THEIR HUMAN OWNERS**

(71) Applicant: THALES DIS FRANCE SAS, 92190 Meudon (FR)
(72) Inventor: COMPARIN, Débora, 92120 MONTROUGE (FR); OROZCO, Paul Sydney, MONTREAL, H3W 1W9 (CA); ARGUELLO, Yonatan Alejandro, MONTREAL, H3Y 2M1 (CA); DUGAND, Juan-David, 13090 AIX EN PROVENCE (FR)
(74) Representative: Grevin, Emmanuel

(57) **Abstract**

Provided is a system (100) and methods (140, 200) for handling identity management of Al agents and their human controlling owners in an Identity and Access Management (IAM) ecosystem Work flow steps in the Authorization Code Flow, compliant with with OAuth 2.0 and PKCE, have been introduced for registration (202) of the Al Agent (123) by the human owner, generation of new Delegation Tokens, wherein the Authorization Server (125) transforms the user delegated AI Agent information, use of new scopes for the "response_type" (241, 251) to accommodate for the AI Agent ID and Delegation tokens (240, 242, 250, 252), and Front Channel redirections (211, 221) back to the Application Client that includes the Al ID Token (240, 250) and Delegation Token (242, 252) along with the authorization code for allowing an Al Agent (123) to securely access a protected resource. Other embodiments disclosed.

## Description

### TECHNICAL FIELD

The present invention relates generally to Identity and Access Management (IAM), and more particularly, to managing identity management of Artificial Intelligence (Al) agents and their human counterparts owning and controlling the AI agents, and more specifically, to improving authentication code flow and task delegation to AI agents while protecting online spaces.

### BACKGROUND

Identity and Access Management (IAM) is the security discipline that enables the right users to access the right resources at the right time for the right reasons. It is a framework of policies and technologies to ensure that these users have the appropriate access to technology resources. An IAM administrator can centrally manage permissions to control which resources a user can access. Within the IAM ecosystem, authentication and authorization are two vital and separate information security processes that administrators use to protect systems and information. Authentication verifies the identity of a user or service, and authorization determines their access rights.

Within the IAM realm, Artificial Intelligence (Al) agents are software programs designed to act and make decisions autonomously within their environment to achieve specific goals. They perceive, analyze, and act upon information from their surroundings, for example, using AI techniques like machine learning and natural language processing to learn, adapt, and solve problems. They are analogous to intelligent software tools that can automate tasks and perform actions on behalf of users.

Despite their potential, one problem with AI agents is that they pose certain security risks around technical limitations, ethical concerns and broader societal impacts associated with a system's level of autonomy and the overall potential of its use when humans are not actively involved in overseeing AI agent tasks. Technical risks include errors and malfunctions and security issues including the potential for automating cyberattacks. And, existing standards directed to authentication code flow in IAM, such as IETF RFC 6749 directed to the OAuth 2.0 Authorization Framework, do not propose how to handle identity management of AI agents and their humans to protect online spaces, let alone, propose an identity management framework for unlocking the value of task delegation to autonomous AI agents.

Accordingly, a solution is needed to address open problems surrounding AI agent implementations in an IAM infrastructure. All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments a system (100) is provided for handling identity management of AI agents and their human controller counterpart owner that is a user in an IAM ecosystem by way of an OAuth Authorization Code Flow between components of the system. In some embodiments the Authorization Code Flow is OAuth 2.0 with PKCE extension for hybrid flow. In some embodiments the system creates User Token, AI ID Token, or Delegation Token, which can be formatted as a Jason Web Token (JWT) or other data object type.

The system can comprise an AI Agent (123); an Application Client (102); an Authorization Server (125); and a Resource Server (131). During the OAuth Authorization Code Flow, the Authorization Server (125) may optionally receive a User registration request from the Application Client (102) to register (201) the User in a Know Your Customer (KYC) context. This is an optional step whether the User wants to register with their AI agent, or register their AI Agent alone. The Authorization Server (125) can receive an Agent registration request from the User to register (201) the AI Agent (123) in a Know Your Agent (KYA) context. The Authorization Server (125) can bind a User Identity (122) to the AI Agent (123) that delegates responsibilities from the User to the AI Agent (123). The Authorization Server (125) can create an AI ID Token (240) for the AI Agent (123) and a corresponding Delegation Token (242) responsive to a Front Channel (FC) redirect from the Application Client (102) containing a hashed code verifier (PKCE), a client ID, and a "response_type". The Authorization Server (125) can issue a Front Channel (FC) redirection request to the Application Client (102) that includes the Al ID Token (240), the Delegation Token (242), and an authorization code.

In some embodiments, the Authorization Server (125) can receive from the Application Client (102) a Back Channel (BC) request with a code verifier (PKCE), a client ID, a client secret, and the authorization code) and authenticates from this request the Application Client (102). The Authorization Server (125) can verify the authorization code, the code verifier (PKCE), and link with the Client ID from the Delegation Token, and issues a Back Channel (BC) response with an Access Token and a Refresh Token to the Application Client (102). The Application Client (102) can thereafter uses the Access Token to access protected resources from the Resource Server (131). In some embodiments the Authorization Server (125) transforms AI Agent information and user delegations into the Delegation Token.

In some embodiments, the Authorization Server (125) interprets scopes for the "response_type" to accommodate the Al agent ID and Delegation Token. Wherein for a response_type of "code AI_ID_Token", the Authorization Server (125) can respond (211) to the Application Client 102 over the Forward Channel (FC) with a redirect including the Al_ID_Token, Delegation Token, and authorization code, wherein the Delegation Token is a signed data blob containing property-value pairs (240); the Application Client 102 can send (212) to the Authorization Server (131) over a Background Channel (BC) request containing the code verifier (PKCE), the client ID, client secret, and authorization code. In some embodiments, the Authorization Server (131) can authenticate the Application Client (102) based on the client ID and client secret, and then verifies the authorization code, the code verifier (PKCE) and link with the client ID, whereby the Delegation Token (240) includes a link to the user (owner) which it compares against the received client ID of the Application Client 102; and the Authorization Server (125), upon verification of the authorization code, can send (215) the Access Token and Refresh Token via a Back Channel (BC) request to the Application Client 102; wherein after the Application Client (102) presents the Access Token to the Resource Server (131), which returns (217) the protected resources back to the Application Client (102).

In some embodiments, wherein for a response_type of "code ID_Token Al_ID_Token", the Authorization Server (125) responds (221) to the Application Client (102) over the Forward Channel (FC) with a redirect including the AI_ID_Token, ID_Token, Delegation Token, and authorization code, wherein the Delegation Token is a signed data blob, for example, a JWT containing property-value pairs (250); the Application Client (102) can send (222) to the Authorization Server (131) over a Background Channel (BC) request containing the code verifier (PKCE), the client ID, client secret, and authorization code. In some embodiments, the Authorization Server (131) can authenticate the Application Client (102) based on the client ID and client secret, and then verifies the authorization code, the code verifier (PKCE) and link with the client ID, whereby the Delegation Token (250) includes a link to the user (owner) which it compares against the received client ID of the Application Client (102); and the Authorization Server 125, upon verification of the authorization code, sends (225) the Access Token and Refresh Token via a Back Channel (BC) request to the Application Client 102; wherein after, the Application Client (102) can present the Access Token to the Resource Server (131), which returns (227) the protected resources back to the Application Client (102).

In some embodiments an Authorization Server (125) is provided for handling identity management of AI agents and their human controller counterpart owner that is a user in an IAM ecosystem by way of an OAuth Authorization Code Flow between components of a system, the system comprising an AI Agent (123); an Application Client (102); an Authorization Server (125); and a Resource Server (131). During the Authorization Code Flow, the Authorization Server (125) optionally receives a User registration request from the Application Client (102) to register (201) itself in a Know Your Customer (KYC) context; the Authorization Server (125) receives an Agent registration request from the User to register (201) the User in a Know Your Agent (KYA) context, whereby the Authorization Server (125) binds a User Identity (122) to the AI Agent (123) that delegates responsibilities from the User to the AI Agent (123). The Authorization Server (125) can create an AI ID Token (240) for the AI Agent (123) and a corresponding Delegation Token (242) responsive to a Front Channel (FC) redirect from the Application Client (102) containing a hashed code verifier (PKCE), a client ID, and a "response_type".

In some embodiments, the Authorization Server (125) can issue a Front Channel (FC) redirection request to the Application Client (102) that includes the AI ID Token (240) , the Delegation Token (242), and an authorization code, can receive from the Application Client (102) a Back Channel (BC) request with a code verifier (PKCE), a client ID, a client secret, and the authorization code) and authenticates from this request the Application Client (102), and can verify the authorization code, the code verifier (PKCE), and link with the Client ID from the Delegation Token; can issue a Back Channel (BC) response with an Access Token and a Refresh Token to the Application Client (102), whereby the Application Client (102) thereafter uses the Access Token to access protected resources from the Resource Server (131).

In some embodiments, the Authorization Server (125) can transform AI Agent information and user delegations into the Delegation Token. In some embodiments it can interpret scopes for the "response_type" to accommodate the AI agent ID and Delegation Token.

In some embodiments, for a response_type of "code AI_ID_Token", the Authorization Server (125) can respond (211) to the Application Client 102 over the Forward Channel (FC) with a redirect including the AI_ID_Token, Delegation Token, and authorization code, wherein the Delegation Token is a signed data blob, such as a JWT, containing property-value pairs (240); the Application Client 102 can send (212) to the Authorization Server (131) over a Background Channel (BC) request containing the code verifier (PKCE), the client ID, client secret, and authorization code; the Authorization Server (131) can authenticate the Application Client (102) based on the client ID and client secret, and then verifies the authorization code, the code verifier (PKCE) and link with the client ID, whereby the Delegation Token (240) can include a link to the user (owner) which it compares against the received client ID of the Application Client 102; and the Authorization Server (125), upon verification of the authorization code, can send (215) the Access Token and Refresh Token via a Back Channel (BC) request to the Application Client 102; wherein after the Application Client (102) can present the Access Token to the Resource Server (131), which returns (217) the protected resources back to the Application Client (102).

In some embodiments, for a response_type of "code ID_Token Al_ID_Token", the Authorization Server (125) can respond (221) to the Application Client (102) over the Forward Channel (FC) with a redirect including the AI_ID_Token, ID_Token, Delegation Token, and authorization code, wherein the Delegation Token is a signed data blob, such as a JWT containing property-value pairs (250);. the Application Client (102) can send (222) to the Authorization Server (131) over a Background Channel (BC) request containing the code verifier (PKCE), the client ID, client secret, and authorization code; the Authorization Server (131) can authenticate the Application Client (102) based on the client ID and client secret, and then verifies the authorization code, the code verifier (PKCE) and link with the client ID, whereby the Delegation Token (250) includes a link to the user (owner) which it compares against the received client ID of the Application Client (102); and the Authorization Server 125, can upon verification of the authorization code, send (225) the Access Token and Refresh Token via a Back Channel (BC) request to the Application Client 102; wherein after, the Application Client (102) can present the Access Token to the Resource Server (131), which returns (227) the protected resources back to the the Application Client (102).

In some embodiments, the Authorization Server (125) uses an OAuth 2.0 Authorization Code Flow. In some embodiments the Authorization Code Flow is OAuth 2.0 with PKCE extension for hybrid flow.

All the above embodiments can function or operate independently of one another, and alone, or in combination with one another. No particular embodiment described above is limited to any other embodiment, and each embodiment alone or in combination can be coupled with others.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** illustrates a system for handling identity management of AI agents and their human controllers in an IAM ecosystem in accordance with one embodiment;
**FIG. 1B** depicts a method for handling identity management of AI Agents and their human controlling counterparts by way of the system above in accordance with one embodiment;
**FIG. 2A** is a sequence diagram of a method for handling identity management of AI agents in an OAuth environment in accordance with one embodiment;
**FIG. 2B** is a continuation of the sequence diagram of FIG. 2A;
**FIG. 3** depicts an environment providing telecommunication services in an IAM ecosystem supporting Single Sign-On (SSO) licensing in accordance with one embodiment;
**FIG. 4A** is a sequence diagram for a Model Context Protocol (MCP) protocol with task delegation to an AI Agent from their human owner in accordance with one embodiment;
**FIG. 4B** is a sequence diagram for an Agent to Agent (A2A) protocol with task delegation to an AI Agent from their human owner in accordance with one embodiment;
**FIG. 5** illustrates an exemplary component block diagram of computational device handling identity management of AI agents and their human controllers in an IAM ecosystem in accordance with some embodiments;
**FIG. 6** illustrates an example of a storage medium suitable for use with the computational device in accordance with some embodiments; and
**FIG. 7** illustrates an example of a computing platform suitable for use in performing the methods herein in accordance with some embodiments.

Specific embodiments in this invention have been shown by way of example in the foregoing drawings and are hereinafter described in detail. The figures and written description are not intended to limit the scope of the inventive concepts in any manner.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Briefly, Artificial Intelligence (AI) systems are increasingly pervasive, yet information needed to decide whether and how to engage with them may not exist or be accessible. One technical problem with these AI systems is due to the introduction of a security vulnerability wherein an AI Agent handles a user access token. As the AI agent becomes increasingly autonomous, it can abuse the user access token and corresponding responsibilities associated with securely accessing resources. This is because the AI Agent has the same level of authorization as with a human being, and the resource server cannot differentiate a real user from an AI Agent. To this point, it would make sense for a Resource Server to be able to differentiate an AI agent from their human user controlling the AI agent

Accordingly the problem to solve becomes that of determining who is the AI Agent, how to identify the AI Agent, and how to verify its identity in an IAM ecosystem. This also raises questions on what authorization does the AI agent hold, how can a user verify its authenticity, and how can a human delegate authority to AI agents. Moreover, this poses technical questions as to who is the human even controlling the AI agent, how can a user verify his/her identity, and how can the AI agent present a human identity on behalf of the human, for example, using a human passport to book a flight.

Herein provided is a solution that presents modifications, or extensions, to the Authorization Code Flow, with applicability also to the PKCE/Hybrid Flow, in order to adapt it to AI Agents that address the problems above, and without breaking the compatibility with OAuth 2.0 standard. As will be explained ahead, certain inventive work flow steps are added for i) a registration of the AI Agent by the human owner, ii) generation of new Delegation Tokens wherein the AI Agent Authorization server transforms the AI Agent information, new scopes for the "response_type" to accommodate for the AI agent ID and Delegation tokens, and iii) Front Channel redirections back to the Application Client in OAuth 2 Authorization Code Flow that includes the ID Token and Delegation Token along with the authorization code.

Advantageously, this solution complies with the OAuth 2 standard and therefore can be easily implemented in the current market solutions. It ensures minimal overhead for stakeholders in that these proposed changes are focused on new tokens and new scopes for easy implementation with the existing Authorization Code Flow standard. And as a result of binding the user identity with the AI agent identity, it opens up implementations for many use cases where the ID of the human owner, is needed. Moreover, it allows for the user to define verifiable delegation of authority to the AI agent (even if static one) therefore increasing the security of the AI Agent transaction with other entities.

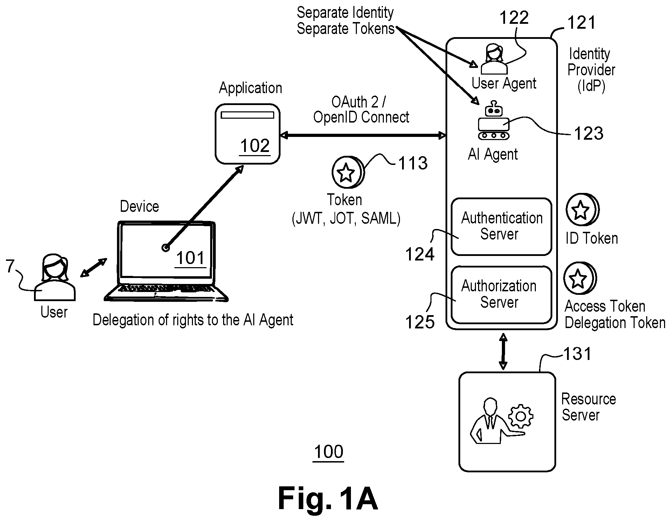

To these points, **FIG. 1A** illustrates a system **100** for handling identity management of AI agents and their human controllers in an Identity and Access Management (IAM) ecosystem in accordance with one embodiment. The system **100** comprises a Device **101,** an Application Client **102,** an Identity Provider (IdP) **121,** and a Resource Server **131.** The Device **101** can be a computer or mobile device with an operating system (OS) or browser for running the Application **102,** which may a native app executing on the OS or a web app delivered over the browser.

The Identity Provider (IdP) **121** is a service that creates, stores and manages digital identities. In this exemplary embodiment, the IdP **121** functions as both an Authentication Server **124** to issue Identify (ID) Tokens, and an Authorization Server **125** to issue Access Tokens, in accordance with OIDC and OAuth protocols. This allows it to act as a central authority for managing user identities, AI Agent identities, and issuing tokens that applications use for authentication and authorization. The IdP **121** can provide the user or their internet-connected device authentication with a single set of login credentials **122.** This ensures to other entities that the user is who they claim to be. The IdP **121** can identify the Application **102,** including the operating system, and version of the requesting device **101,** or other client side markers. It is a way to tell which software is making an API call, which can be used to restrict access or for auditing purposes.

The AI agent **123** is a software entity that uses AI to autonomously perform tasks on behalf of the user **7,** other users, or other systems, often requiring access to resources and other systems. The user registers the AI Agent **123** and delegations at the Authorization Server **125** as described ahead. The user can control the delegations as owner at this stage, and does not depend on the user prompts to the AI Agent **123.** This allows the AI agent to behave like a human, for example, to navigate itself to the webpage, or Application **102,** and start a log-in process. To this purpose, the Authorization Server **125** includes an AI Agent token endpoint to transform the AI Agent **123** information and the user delegations into new token types; namely an "AI Agent ID" Token and a "Delegation" Token. Within the OAuth framework, as described ahead, new scopes are also proposed ahead for the response_type to accommodate the new AI Agent ID Token and Delegation Token.

By way of the improved Authorization Code Flow within the system **100** discussed ahead, the User **7** and the AI agent **123** can each be selectively given and assigned their own identities. Via a registration process, each can be associated with their own individual and separate Identity Token. Where appropriate, the User **7** will have a "User ID" Token with its own credentials **122.** In other situations, the AI Agent **123** will have its own "AI ID" Token. The assignment of separate identities and distinct Access/Delegation tokens reduces the risk of the AI Agent **123** improperly handling or abusing the user's access token for accessing resources.

Separate identities allows the Resource Server **131** to distinguish the AI Agent **123** from the User, and also in some situations, to treat the AI Agent **123** the same as the User **7.** In other cases, the user may delegate to the AI Agent **123** thereby allowing it to authenticate on its own, and then accessing resources under its own identity. This allows the AI Agent **123** to behave, and be treated, like its human counterpart, so that it can perform actions of a human, for example, navigating to the webpage/application client and starting an actual login request.

The Resource Server **131** is a service or API of the system **100** that hosts protected resources and handles requests for those resources. It's responsible for validating access tokens and determining if a user or application has the necessary permissions to access specific resources. It is analogous to a gatekeeper of the API's data. The Resource Server **131** verifies an Access Token's validity and decides whether it should grant access to the requested resource. In the context of OAuth, the Resource Server **131** is an application that protects resources via OAuth tokens. The Access Tokens are issued by the IdP **121,** or associated Authorization Server **125,** to the Application Client **102.** The Resource Server **131** validates the Access Token before serving a resource to the Device **101.** It's essentially the "endpoint" where the client requests access to a protected resource after obtaining an access token from the authorization serve

The IdP **121** can communicate with other entities, such as the Resource Server **131,** and other web service providers via Security Assertion Markup Language (SAML), or data formats like Open ID Connect (OIDC) or Open Authorization 2 (OAuth). OAuth itself primarily focuses on authorization, granting access to protected resources. It uses Access Tokens for authorizing access to resources. OIDC builds upon OAuth to provide a layer for authentication and identity assertion. OIDC uses ID tokens to verify the user's identity and the AI Agent's identity.

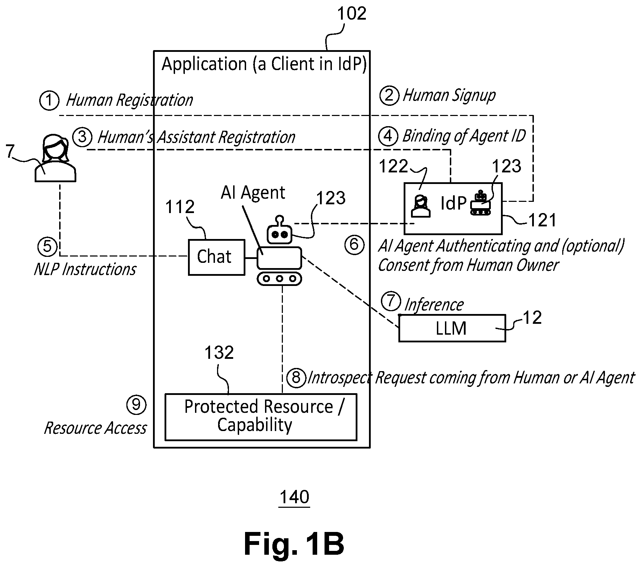

**FIG. 1B** illustratively depicts a method **140** for handling identity management of AI Agents and their human controlling counterparts (owners) by way of the system **100** shown in FIG. 1. The method **140** may include more or less than the number of steps shown, and may be practiced by components shown in **FIG. 1****,** but is not limited to only these method steps or those components shown. Reference will be made to the components of **FIG. 1** when describing the method steps, but is not limited to only those components shown. In the foregoing, the assumptions are that i) the AI Agent **123** is owned by the user, and ii) the AI Agent **123** and the Resource Server **131** share the same Authorization Server **125.** A new inventive mechanism here is the registration of the AI Agent 123 by the user that performs all the delegations right in the Authorization Server 125. The user controls the degrees of freedom that the AI Agent 123 can have, and it's not tied to only a particular prompt session. Here also, it should be pointed out that method steps **1-5** involve user input; that is, the human is interacting with the Application Client 102. Thereafter, steps **6-7** are performed by the AI Agent **123,** once it is bound, assigned its delegations and instructed to act on behalf of the user.

The method **140** can begin at step **1** at which time the user **7,** a human, registers themselves with the Application **102;** also considered a client in the IdP **121.** This may include providing the usual information, such as name, address, email, and so on. At step **2,** the user signs up via the Application **102** with the IdP **121** services. This may include having the user present certain information and credentials **122** for authentication purposes. In some cases, the IdP **121** assigns a User Agent to the human user. This binding is termed "Know Your Customer" (KYC) in order to automate and enhance customer identity verification. In other cases, as in this inventive embodiment example, at step **3,** the user also, or instead, registers the AI Agent **123** with the IdP **121,** which at step **4** results in the binding of the AI Agent **123** to the human user. Here, the user registers the AI Agent 123 and the Delegations at the Authorization Server 125. This binding is termed "Know Your Agent" (KYA) in order to automate and improve AI Agent verification.

Notably, at this point, the AI Agent **123** has its own identity which allows entities in the system 100 to distinguish between the real user **7** and the AI Agent **123.** The AI Agent **123** is afforded its own AI ID Token for authentication purposes and a Delegation Token for authorization purposes, each with its own separate life style. This Al ID Token includes a link to its owner, the user, that is checked later during authentication. So, in effect, the user is the one delegating its own rights to the the AI Agent **123.** Here, the owner can control the degree of attributes, capabilities, and traits of the AI Agent, including eventually revoking the the credential of an agent delegation. In OAuth, delegation refers to the ability of a user to grant a third-party application permission to access their resources on their behalf, without the user needing to directly provide their credentials to the third-party app. Claims, on the contrary, are statements of information about the user or the application, often included in the Access token or ID token, that specify the access granted or other relevant details.

Briefly recall that the method steps 1 to 4 related to user input and interaction, whereas the following method steps 6 to 8 are performed by the AI Agent 123. This a paradigm shift to current AI Agent management. Whereas in the past, the AI Agent 123 was treated as a machine, for example, via machine to machine authentication, in the inventive embodiments herein disclosed, the AI Agent **123** will now authenticate in the same manner as a human. Here, the AI Agent has its own identity via an "AI ID" Token; and, hence the AI Agent obtains a different token than the "User ID" Token of the user with its own lifecycle. In this methodology, the User (or Owner) of the AI Agents controls the degree of capabilities, traits, roles, attributes and lifecycle by way of the new AI ID Token and related Delegation Token.

In this scheme, the "know your Agent" (KYA) binding allows the AI Agent **123** to use an AI tool, such as the Chat Prompt **112,** to interact and connect to a web page on behalf of their human counterpart. This is not merely a Chat Bot to simulate human conversation, typically through text or voice. Rather, it is a coupling of the Chat Prompt 112 to the AI Agent 123, which communicates on behalf of the user through the dialogue of the Chat Prompt 112 to other components such as the LLM 12. In this example, it is a single delegation task that allows the AI Agent **123** to interact with the Chat Prompt **112** on the user's behalf. By way of user delegations during the registration steps, the AI Agent will be treated the same as an actual human. That is, the user is the one delegating its own rights to the AI Agent. The owner can control the degree of attributes, capabilities, traits that the AI Agent can do. Here, at step **5,** the user, via the Application **102** engages with the Chat Prompt **112,** whereby the user's voice is converted to voice commands for interacting with the AI Agent 123.

The AI Agent **123,** upon recognizing the user's interaction with the Chat Prompt **112** corresponds to a delegation task, authenticates itself to the IdP **121** in order to act on the user's behalf at step **6.** The OAuth 2.0 specification defines a delegation protocol that is useful for conveying authorization decisions across a network of web-enabled applications and APIs. OAuth allows a user to delegate some level of access to his or her data to a third-party entity without handing over complete credentials. Actor claim sets such as a User Agent and AI Agent **123** can be chained to present a clear chain of delegation in accordance with existing OAuth standards.

During this step **6,** the IdP **121** will authenticate the AI Agent **123,** and optionally, may request consent from the human owner. This consent may be transmitted on an out of bound channel to the user for example via their phone. Thereafter, the AI Agent **123** is authenticated to act on the user's behalf, for example, by authorizing the Chat Prompt **112** to connect to a web page. This may occur, for example, via Natural Language Processing (NLP) systems, or via inference using Large Language Models **12,** as shown in step **7.** In this example, the user may be seeking to book airplane flights, and via the Chat Prompt to the AI Agent **123,** the user tells the AI Agent **123** to search and book flights. In this scenario, the AI Agent **123** is treated the same as a human user.

Continuing with method **140,** at step **8,** the Application Client 102 can inspect the request coming from the human or AI Agent **123** to access the protected resources or capabilities **132.** In OAuth, an introspect request is a method used by the Resource Server **131** to check the validity and other metadata of access tokens. This mechanism allows the Resource Server **131** to determine if an access token is still active, what user and scopes are associated with it, and other relevant information. Upon introspection, the user by way of the AI Agent 123 can access the resources on the Resource Server **131** at step **9.**

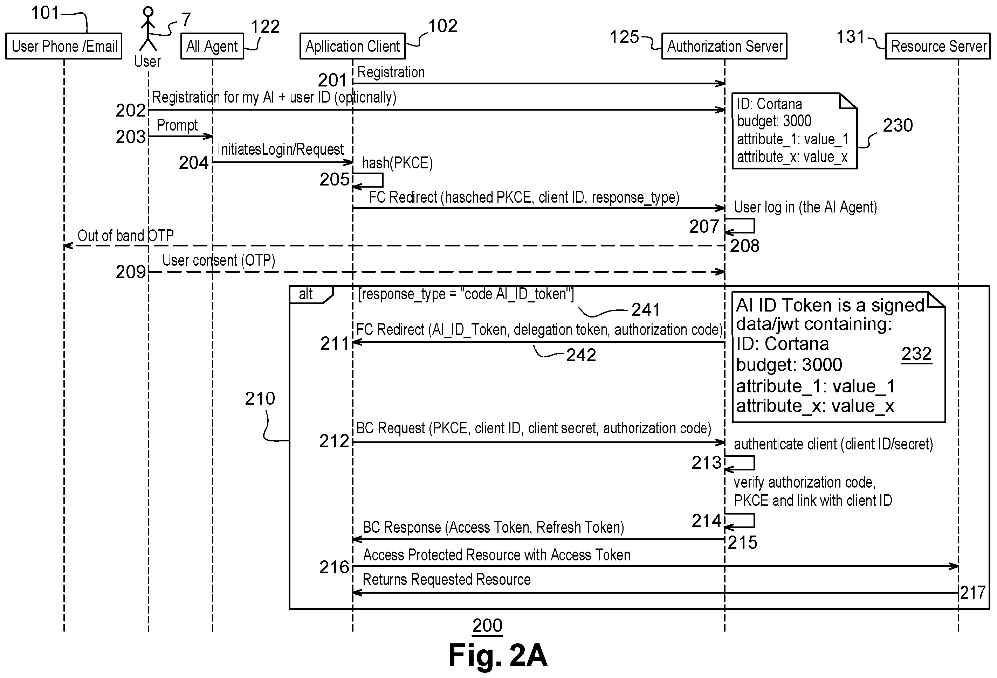

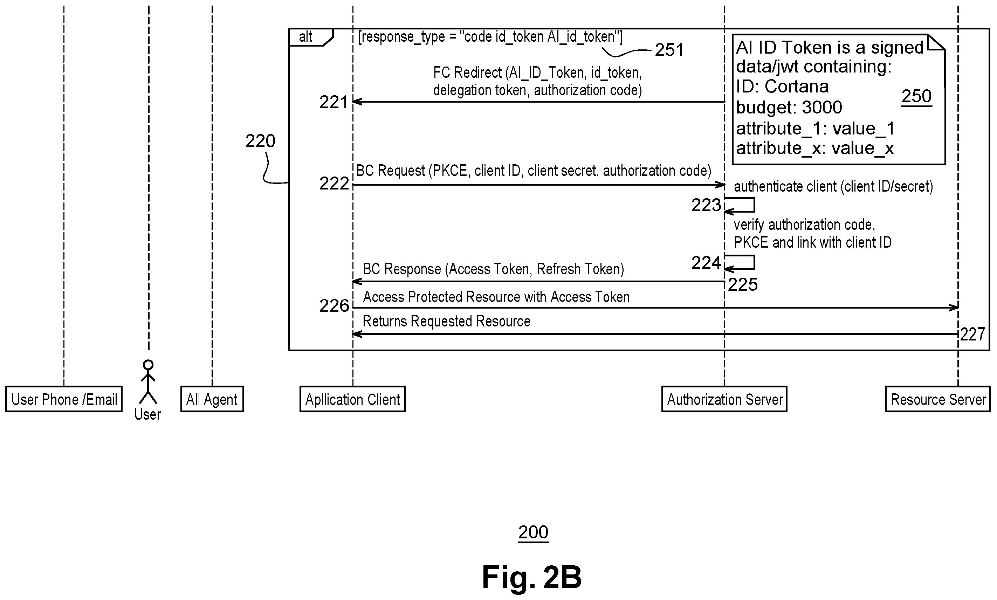

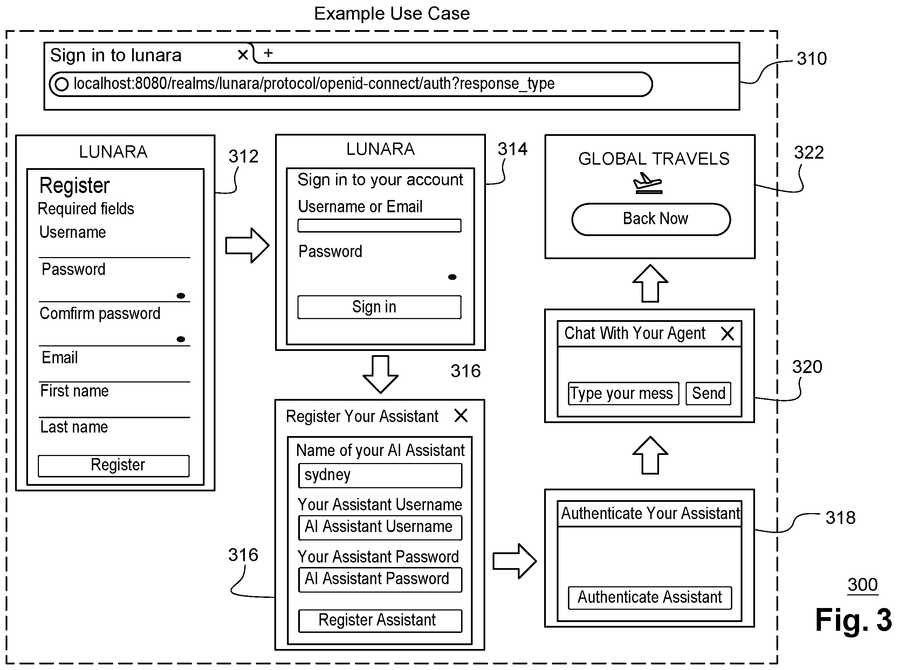

**FIG. 2** illustrates a sequence diagram of a method **200** for handling identity management of AI agents and their human controlling counterparts. The system components for practicing the method **200** include the AI Agent **123,** the Application Client **102,** the Authorization Server **125,** and the Resource Server **131.** The User **7** may also use their own Device **101,** such as, a mobile phone, for out of band authentication, for example, using One Time Passcodes (OTP). This exemplary embodiment uses a federated ID framework based on the OAuth 2.0 standard. In this embodiment, inventive modifications and steps (see **202, 230, 211, 240-242, 221,** and **250-252**) are introduced onto the Authorization Code Flow with PKCE/ Hybrid Flow. It addresses the problems highlighted herein, and without breaking compatibility with the OAuth 2.0 standard. Reference to screen shots of an example Application Client 102 shown in FIG. 3 will also be made to illustrate the human user and AI Agent hand-off interactions.

Briefly, OAuth 2 uses two channels: a Front Channel (FC) and a Back Channel (BC). The front channel is what goes over the browser, for example, passing data via the browser's address bar. The back channel is a secure HTTP call directly from the client application to the resource server, such as the request to exchange the authorization code for tokens. There are HTTPS requests from client to server so requests cannot be tampered with. These acronyms (FC, BC) are seen at certain steps in the sequence diagram, for example, the FC browser redirect at step **211,** and the BC request at step **212.**

Also, Proof Key for Code Exchange (PKCE) is an OAuth 2.0 extension designed to enhance security for public clients, particularly those like native mobile apps and single-page applications, which can't securely store client secrets. It prevents authorization code interception attacks by introducing a challenge-response mechanism using a code verifier and a code challenge as seen in steps **205-206, 212, 214, 222** and **224**). The PKCE extension is now recommended beyond native apps and SPA.

The method **200** can start at step **201,** at which time the User, by way of the Application Client 102, registers with the Authorization Server 125. This is analogous to steps 1-2 of FIG. 1B. Briefly referring to **FIG. 3****,** this corresponds to prompt display **312.** This is analogous to the Know Your Customer (KYC) use case, where the user interacts with the prompt. The user provides their own credentials and proceeds to register; this is an existing step of the Authentication Code Flow defined in OAuth 2.0 RFC 6749, section 4, which defines the core framework for authorization in OAuth 2.0, outlining roles, flows, and error handling. During this step, the user may also be asked to authenticate.

At step **202,** the user (owner) may also be asked to authenticate, for instance, if they are signed up for a particular service, for example, to use the Chat Prompt 112, which will result in the Authorization Server 125 assigning a separate User ID Token distinct from the AI ID Token. These steps are analogous to steps 3-4 of FIG. 1B. This corresponds to prompt display **314** in FIG. 3, where the user signs into their account for the travel booking example. After this step, the user has been registered, but not yet the AI Agent. This step involves the Human Owner setting the attributes of their AI Agent, for example, like setting up the profile of the AI Agent - and then submitted to Authorization Server to be registered. An example could be a "Know Your Agent" form displayed in a UI such as in a browser, to be filled by the authenticated Human Owner and then saved.

Step **202** is a unique step, whereby the User then enrolls, or registers, the AI Agent 123 to act on their behalf. This corresponds to prompt display **316** in FIG. 3, where the user is prompted to enroll, or register, their Agent. This binding results in the Know Your Agent (KYA) use case condition. However, the AI Agent has not yet authenticated, only the user. Accordingly, the user is prompted with an "authenticate your AI assistant" dialogue box, which corresponds to prompt display **318** in FIG. 3

This will result in the Authorization Server 125 assigning an ID Token, for example, shown as text box 230, which in practice may be a signed data blob, such as a JWT, or other formatted token, message, or communication. It represents a profile of the AI Agent, the attributes, the allowed and not-allowed actions etc.. These attributes normally vary depending on what the usage of the AI Agent is for, for example, if it is a travel-domain AI Agent - that might represent a budget limit for the flight cost, etc.. This ID Token includes, but is not limited to, properties and values, such as ID, budget, and attributes. This ID Token allows the owner to control the degree of attributes, capabilities, traits that the AI Agent 123 can do, including eventually revoking the credential of an agent delegations, including chains of delegations. Delegation claims are made in accordance with OAuth 2.0 RFC 8693 section 4, which specifies a protocol for exchanging tokens, enabling service-to-service communication and delegation. In this example single delegation, the user delegates the AI Agent 123 to interact with the Chat Prompt 112 (see FIG. 1B).

Briefly, section 4 of RFC 8693, "OAuth 2.0 Token Exchange," defines JWT claims and introspection response parameters used in the token exchange process. It specifies how JWT claims are used to convey information about the actor (the party acting on behalf of another), authorized actors, and other relevant details. For example, an actor claim identifies the acting party to whom authority has been delegated within the JWT, the scope claim specifies the scopes associated with the token. The scope is a mechanism that limits an application's access to a user's data; namely, a permission set that specifies what an application can and cannot do on behalf of a use.

At this point, the Application Client 102 is registered and authenticated with the Authorization Server 125, the delegations have been entered, and the AI Agent 123 is bound to the User (owner). The Token 230, which in some embodiments is also a JWT, inform others of what tasks the AI Agent 123 is responsible for handling on behalf of the user, for example, interacting with the Chat Prompt 112, and corresponding scope. This registration process may also include a certificate exchange process to establish trust between the Application Client 102 and the Authorization Server 125.

Hereinafter, the AI Agent 123 acts on behalf of the user. This corresponds to prompt display 320 in FIG. 3, where a "Chat with Your AI Agent" prompt dialogue box is presented. As shown at step 203, once the user interacts with the prompt of the Chat Prompt 112, it will be the AI Agent 123 instead who will authenticate on its own with the Authorization Server 125, and not the user directly. Notably, this is a separate and distinct authentication from that by the user earlier when the user authenticates (see prompt **314** of **FIG. 3**) or when the user authenticates the AI Agent (see prompt **318** of **FIG. 3**)**.** Here, as seen in step **204,** it is the AI Agent 123, but not the user, which initiates the log-in request on the Application Client 102. This is described in step 6 of previous FIG. 1B.

Briefly, steps **205-206** are directed to PKCE implementation, whereby the client also generates a code verifier (shown as "PKCE") and corresponding hash at step **205** for creating a challenge to the Authorization Server 131. This is done to prevent authorization code theft and authorization code injection attacks. The code verifier (PKCE) is a cryptographically random string generated by the client application, and the code challenge is a Base 64-encoded SHA-256 hash of that code verifier. The Application Client 102 at step **206** sends the hashed code verifier (PKCE), the client ID and a response_type to the Authorization Server 131 over the Forward Channel (FC) redirection. This can be seen in the line text of step 206; "FC Redirect(hashed PCKE, client ID, response_type)

At step **207,** the Authorization Server 131 verifies the PKCE challenge, authenticates this received information over the FC, and logs in the AI Agent 123. At this point, it is the AI Agent 123 that actually authenticates with the Authorization Server 131 to log in. Here, the AI Agent 123 behaves like its human controlling counterpart: it navigates to the webpage/application client and starts a login/request.

Steps **207-209** are related to step 6 in FIG 1B, where the AI Agent 123 authenticates to the Authorization Server 131. Here, there is an option to request user consent for the task, for example, to interact with the Chat Prompt 112 on the user's behalf. This user consent option is shown by the dotted lines of **208** and **209.** These additional steps provide granularity of controls for step-up authentication, so the agent won't abuse its authority, meaning it won't log in on its own outside of the delegated tasks, such as, the Chat Prompt. For instance, at step **208** the Authorization Server 131 sends a One Time Passcode (OTP) over an out of band channel, such as Short Message Service (SMS), for seeking the User's consent, which is returned at step **209.** Other out of band channel mechanisms such as MMS, RCS, and various forms of instant messaging (IM) are contemplated.

Once the user consents, or if not by default, the application client 102 will request an Al ID Token in addition to the standard authorization code. This request signals to the Authorization Server 131 a special access token request; namely, a request for both an Al ID Token and a Delegation Token to accompany the authorization code, for example, over the Forward Channel (FC) as seen in steps **211** or **221.** It is "special" because it is the AI Agent 123 that is making the request for authorization, and not the user, or another User Agent.

Normally, when an authorization request is made, the authorization code grant type requires the Authorization Server 125 to generate an authorization code, which is returned to the client application via a redirect URL. This authorization code can then be exchanged for an access token, which can be used to access the user's data. Here however, because the AI Agent 123 has its own identity, separate from that of the user, the Authentication Server 124 generates an Al ID Token for authentication purposes of the Application Client 102 and also a corresponding Delegation Token for authorizing access to resources.

Briefly, flowcharts **210** and **211** are sufficiently similar except for the extent of the response_type over the Forward Channel (FC). Whereas in flowchart **210,** the response type **241** is "code" for an "AI ID" Token, in flowchart **220,** the response type **251** is "code" for both a User "ID" Token and an "Al ID" Token. Accordingly, for step **211,** the FC redirect includes as parameters the AI_ID_Token, Delegation Token **242** and Authorization Code. Whereas in step **221,** the FC redirect includes additionally as parameters the AI_ID_Token, User_ID_Token, Delegation Token **252** and Authorization Code.

In the case where response_type is "code Al_ID_Token" steps **211 -217** apply. At step **211** the Authorization Server 125 responds to the Application Client 102 over the Forward Channel (FC) with a redirect including the AI_ID_Token, Delegation Token, and authorization code. The Delegation Token is a signed data blob, for example, a JWT containing property-value pairs, as seen in **240.** At step **212,** the Application Client 102 sends to the Authorization Server 131 over a Background Channel (BC) request containing the code verifier (PKCE), the client ID, client secret, and authorization code.

At step **213,** the Authorization Server 131 authenticates the Application Client based on the client ID and client secret. At step **214,** it then verifies the authorization code, the code verifier (PKCE) and link with the client ID. The Delegation Token **240** includes a link to the user (owner) which it compares against the received client ID of the Application Client 102. Upon verification of the authorization code, the Authorization Server 125 at step **215** sends the Access Token and Refresh Token via a Back Channel (BC) request to the Application Client 102. At step **216,** the Application Client 102 presents the Access Token to the Resource Server 131, which returns the protected resources back to the Application Client 102 at step **217.** This corresponds to prompt display **322,** where for this example, the AI Agent books a travel flight and the travel booking prompt is presented.

In the case where response_type is "code ID_Token Al_ID_Token" steps **221 -227** apply. At step **221** the Authorization Server 125 responds to the Application Client 102 over the Forward Channel (FC) with a redirect including the AI_ID_Token, ID_Token, Delegation Token, and authorization code. The Delegation Token is a signed data blob, for example, a JWT containing property-value pairs, as seen in **250.** At step **222,** the Application Client 102 sends to the Authorization Server 131 over a Background Channel (BC) request containing the code verifier (PKCE), the client ID, client secret, and authorization code.

At step **223,** the Authorization Server 131 authenticates the Application Client (102) based on the client ID and client secret. At step **224,** it then verifies the authorization code, the code verifier (PKCE) and link with the client ID. The Delegation Token **250** includes a link to the user (owner) which it compares against the received client ID of the Application Client 102. Upon verification of the authorization code, the Authorization Server 125 at step **225** sends the Access Token and Refresh Token via a Back Channel (BC) request to the Application Client 102. At step **226,** the Application Client 102 presents the Access Token to the Resource Server 131, which returns the protected resources back to the Application Client 102 at step **227.** This corresponds to prompt display **322,** where for this example, the AI Agent books a travel flight and the travel booking prompt is presented.

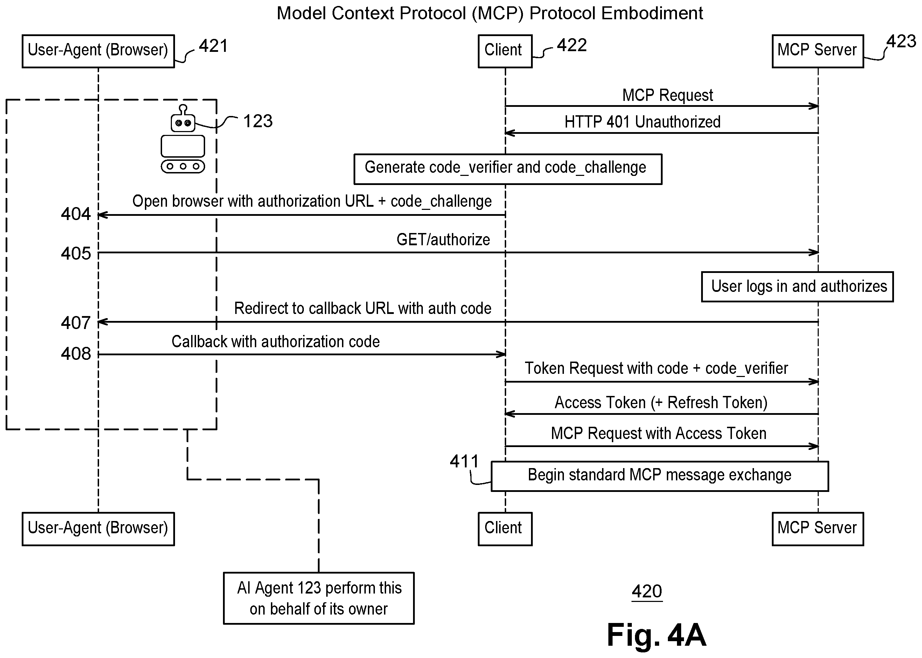

**FIG 4A** is a sequence diagram of a method **420** for a Model Context Protocol (MCP) protocol with task delegation to an AI Agent from their human owner, where the AI Agent was assigned its own identity and delegations according to method 140 and method 200 for example. Briefly, MCP is a standardized way for AI models to connect with and access external data sources, tools, and applications. It acts as a universal interface, simplifying how AI agents interact with their environment and providing a plug-and-play layer for accessing information and performing actions.

The core components of the Model Context Protocol (MCP) are the User-Agent 421, Client 422, and Server 423. The User-Agent is the AI application that interacts with the user and initiates connections. The Client, integrated within the Host, manages communication with a specific MCP server. The Server provides access to tools, resources, and prompts, enabling the AI model to interact with external data and functionalities In this exemplary MCP embodiment, the AI Agent 123 performs the tasks of the User-Agent 421 related to opening the browser with authorization URL and code challenge at step **404,** presenting a GET request for authorization at step **405,** Redirecting to a call back URL with authorization code at step **407,** and a callback with the authorization code at step **408.**

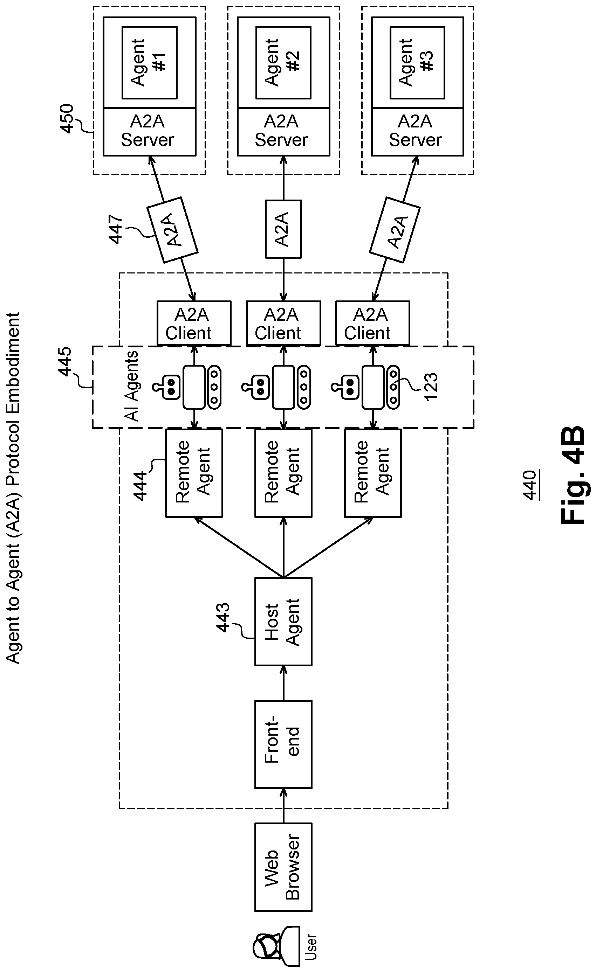

**FIG 4B** is a sequence diagram of a method **440** for an Agent to Agent (A2A) protocol with task delegation to an AI Agent from their human owner, where the AI Agent was assigned its own identity and delegations according to method **140** and method **200** for example. Briefly, A2A is an open specification that enables AI agents to communicate and collaborate across different platforms and ecosystems. It facilitates tasks like sharing knowledge, requesting services, and coordinating actions between agents, ultimately improving user experiences through cooperative efforts. In this exemplary A2A embodiment, the AI Agents **445** are registered between Remote Agents **444** and their A2A Clients to perform A2A calls **447** to respective A2A servers **450** working on behalf of their own Agents. For example, Agent 1 may be a language graphing agent, Agent 2 may be an API agent, and Agent 3 may be a team agent. In this manner, the A2A protocol provides a standardized way for AI Agents to collaborate with other Agents.

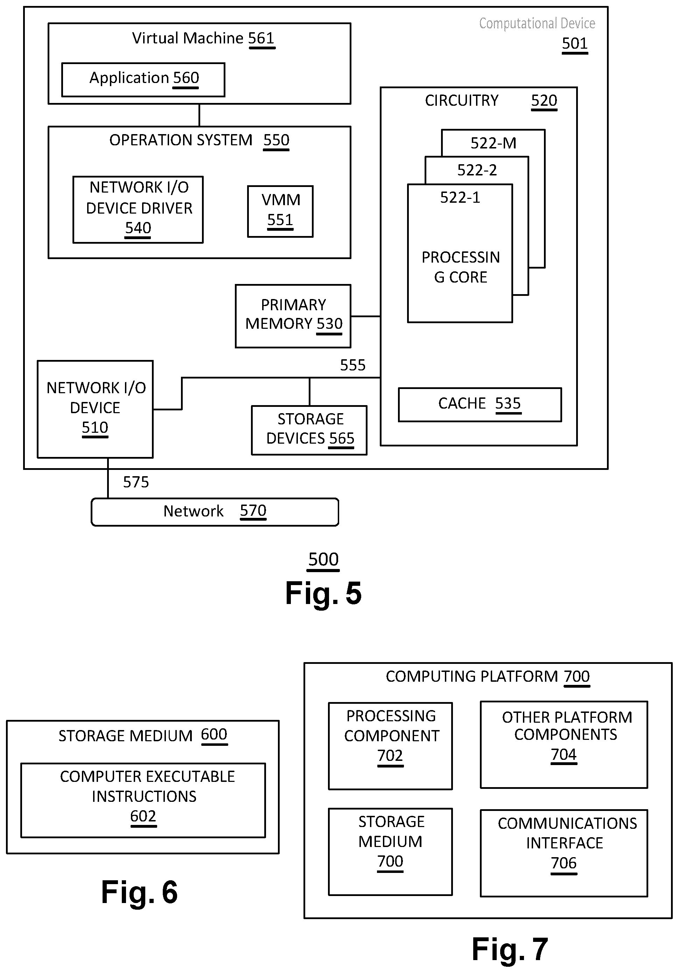

**FIG. 5** shows an exemplary computational device **501** (such as that used in Device **102,** IdP **121** or Resource Server **131** as seen in **FIG. 1A**) that includes electronic circuitry **520** for performing the methods **(140, 200, 420, 440)** described above.

The computational device **501** comprises primary memory **530,** operating system (OS) **550,** Network (NW) I/O device driver **540,** virtual machine manager (VMM) (also known as a hypervisor) **551,** at least one application **560** running in a virtual machine (VM) **561,** and one or more storage devices **565.** In one embodiment, OS **550** is Linux^{™}. In another embodiment, OS **550** is Windows^{®} Server. Other OSs may also be used. In an embodiment, application **560** comprises one or more of a cloud license manager service having one or more smart license automatic detach policies. Network I/O device driver **540** operates to initialize and manage I/O requests performed by network I/O device **510.** In an embodiment, packets and/or packet metadata transmitted to network I/O device **510** and/or received from network I/O device **510** are stored in one or more of primary memory **530** and/or storage devices **565.** In at least one embodiment, storage devices **565** may be one or more of hard disk drives (HDDs) and/or solid-state drives (SSDs). In an embodiment, storage devices **565** may be non-volatile memories (NVMs).

In some examples, as shown in **FIG. 5****,** circuitry **520** may communicatively couple to network I/O device **510** via communications link **555.** In one embodiment, communications link **555** is a peripheral component interface express (PCle) bus conforming to version 3.0 or other versions of the PCIe standard published by the PCI Special Interest Group (PCI-SIG). In some embodiments, the storage devices **565** is a disk storage for storing non-sensitive data such as the format preserving tokens representing date date, and associated encrypted data related to primary account numbers (PANs) or personally identifiable information (PII) associated with PIN entry.

In some examples, operating system **550,** network I/O device driver **540,** VM **561,** and application **560** are implemented, at least in part, via cooperation between one or more memory devices included in primary memory **530** (e.g., volatile or non-volatile memory devices), storage devices **565,** and elements of circuitry **520** such as processors with processing cores **522-1** to **522-m,** where "m" is any positive whole integer greater than 2. In an embodiment, OS **550,** VMM **551,** network I/O device driver **540,** VM **561** and application **560** are executed by one or more processing cores **522-1** to **522-m.**

In some examples, computational device **501,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, computational device **501** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry **520** having processing cores **522-1** to **522-m** may include various commercially available processors, including without limitation Intel^{®}Atom^{®}, Celeron^{®}, Core (2) Duo^{®}, Core i: 3, 5, 7 and 9, Itanium^{®}, Pentium^{®}, Xeon^{®} or Xeon Phi^{®} processors, ARM processors, and similar processors. Circuitry **520** may include at least one cache **535** to store data.

According to some examples, primary memory **530** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **530** may include one or more hard disk drives within and/or accessible by computational device **501.**

**FIG. 6** illustrates an example of a storage medium **600** as may be required by the previously mentioned system components (such as that used in Device **102,** IdP **121** or Resource Server **131** as seen in **FIG. 1A**).

Storage medium **600** may comprise an article of manufacture. In some examples, storage medium **600** may include any non-transitory computer readable medium or machine readable medium, such as an optical, magnetic or semiconductor storage. Storage medium **600** may store various types of computer executable instructions, such as instructions **602** to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or rewriteable memory, and so forth. Examples of computer executable instructions may include any suitable type of code, such as source code, compiled code, interpreted code, executable code, static code, dynamic code, object-oriented code, visual code, and the like. The examples are not limited in this context.

**FIG. 7** illustrates an example computing platform **700** (e.g. Host Device, IFD 110 or ICC 120). as may be required by the previously mentioned system components. In some examples, computing platform **700** may include a processing component **702,** other platform components **704** and/or a communications interface **706.** According to some examples, processing component **702** may execute processing operations or logic for instructions stored on storage medium **600.** Processing component **702** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

In some examples, other platform components **704** may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), types of non-volatile memory such as 3-D cross-point memory that may be byte or block addressable. Non-volatile types of memory may also include other types of byte or block addressable non-volatile memory such as, but not limited to, multi-threshold level NAND flash memory, NOR flash memory, single or multi-level PCM, resistive memory, nanowire memory, FeTRAM, MRAM that incorporates memristor technology, STT-MRAM, or a combination of any of the above. Other types of computer readable and machine-readable storage media may also include magnetic or optical cards, an array of devices such as Redundant Array of Independent Disks (RAID) drives, solid state memory devices (e.g., USB memory), solid state drives (SSD) and any other type of storage media suitable for storing information.

In some examples, communications interface **706** may include logic and/or features to support a communication interface. For these examples, communications interface **706** may include one or more communication interfaces that operate according to various communication protocols or standards to communicate over direct or network communication links or channels. Direct communications may occur via use of communication protocols or standards described in one or more industry standards (including progenies and variants) such as those associated with the peripheral component interconnect express (PCle) specification. Network communications may occur via use of communication protocols or standards such those described in one or more Ethernet standards promulgated by the Institute of Electrical and Electronics Engineers (IEEE). For example, one such Ethernet standard may include IEEE 802.3. Network communication may also occur according to one or more OpenFlow specifications such as the OpenFlow Switch Specification.

The components and features of computing platform **700,** including logic represented by the instructions stored on storage medium **600** may be implemented using any combination of discrete circuitry, ASICs, logic gates and/or single chip architectures. Further, the features of computing platform **700** may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

In some embodiments, components of the system **100 of** **FIG. 1A** is technically enabled by way of one or more computing platforms **700** and/or computational devices 500. It should be appreciated that the exemplary computing platform **700** shown in the block diagram of **FIG. 7** may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

In accordance with various embodiments of the present disclosure, the methods described herein are intended for operation as software programs running on a computer processor or integrated on-chip code within static memory. Furthermore, software implementations can include, but not limited to, distributed processing or component/object distributed processing, parallel processing, or virtual machine processing can also be constructed to implement the methods described herein.

## Claims

1. A system (100) for handling identity management of AI agents and their human controller counterpart owner that is a user in an IAM ecosystem by way of an OAuth Authorization Code Flow between components of the system, the system comprising:
an AI Agent (123);
an Application Client (102);
an Authorization Server (125); and
a Resource Server (131), wherein during the Authorization Code Flow, wherein:
the Authorization Server (125) optionally receives a User registration request from the Application Client (102) to register (201) the User in a Know Your Customer (KYC) context;
the Authorization Server (125) receives an Agent registration request from the User to register (201) the AI Agent (123) in a Know Your Agent (KYA) context,
whereby the Authorization Server (125) binds a User Identity (122) to the Al Agent (123) that delegates responsibilities from the User to the AI Agent (123);
the Authorization Server (125) creates an Al ID Token (240) for the AI Agent (123) and a corresponding Delegation Token (242) responsive to a Front Channel (FC) redirect from the Application Client (102) containing a hashed code verifier (PKCE), a client ID, and a "response_type";
the Authorization Server (125) issues a Front Channel (FC) redirection request to the Application Client (102) that includes the Al ID Token (240), the Delegation Token (242), and an authorization code;
the Authorization Server (125) receives from the Application Client (102) a Back Channel (BC) request with a code verifier (PKCE), a client ID, a client secret, and the authorization code) and authenticates from this request the Application Client (102)
the Authorization Server (125) verifies the authorization code, the code verifier (PKCE), and link with the Client ID from the Delegation Token;
the Authorization Server (125) issues a Back Channel (BC) response with an Access Token and a Refresh Token to the Application Client (102);
whereby the Application Client (102) thereafter uses the Access Token to access protected resources from the Resource Server (131).

2. The system of claim 1, wherein the Authorization Server (125) transforms AI Agent information and user delegations into the Delegation Token.

3. The system of claim 2, wherein the Authorization Server (125) interprets scopes for the "response_type" to accommodate the AI agent ID and Delegation Token.

4. The system of claim 3, wherein for a response_type of "code Al_ID_Token"
the Authorization Server (125) responds (211) to the Application Client 102 over the Forward Channel (FC) with a redirect including the Al_ID_Token, Delegation Token, and authorization code,
wherein the Delegation Token is a signed data blob containing property-value pairs (240);
the Application Client 102 sends (212) to the Authorization Server (131) over a Background Channel (BC) request containing the code verifier (PKCE), the client ID, client secret, and authorization code;
the Authorization Server (131) authenticates the Application Client (102) based on the client ID and client secret, and then verifies the authorization code, the code verifier (PKCE) and link with the client ID,
whereby the Delegation Token (240) includes a link to the user (owner) which it compares against the received client ID of the Application Client 102; and
the Authorization Server (125), upon verification of the authorization code, sends (215) the Access Token and Refresh Token via a Back Channel (BC) request to the Application Client 102; wherein after
the Application Client (102) presents the Access Token to the Resource Server (131),
which returns (217) the protected resources back to the the Application Client (102).

5. The system of claim 3, wherein for a response_type of "code ID_Token Al_ID_Token",
the Authorization Server (125) responds (221) to the Application Client (102) over the Forward Channel (FC) with a redirect including the Al_ID_Token, ID_Token, Delegation Token, and authorization code,
wherein the Delegation Token is a signed data blob, for example, a JWT containing property-value pairs (250);
. the Application Client (102) sends (222) to the Authorization Server (131) over a Background Channel (BC) request containing the code verifier (PKCE), the client ID, client secret, and authorization code;
the Authorization Server (131) authenticates the Application Client (102) based on the client ID and client secret, and then verifies the authorization code, the code verifier (PKCE) and link with the client ID,
whereby the Delegation Token (250) includes a link to the user (owner) which it compares against the received client ID of the Application Client (102); and
the Authorization Server 125, upon verification of the authorization code, sends (225) the Access Token and Refresh Token via a Back Channel (BC) request to the Application Client 102; wherein after,
the Application Client (102) presents the Access Token to the Resource Server (131), which returns (227) the protected resources back to the the Application Client (102).

6. The system of claim 1, wherein the Delegation Token is a Jason Web Token (JWT) .

7. The system of claim 1, wherein the Authorization Code Flow is OAuth 2.0 with PKCE extension for hybrid flow.

8. An Authorization Server (125) for handling identity management of AI agents and their human controller counterpart owner that is a user in an IAM ecosystem by way of an OAuth Authorization Code Flow between components of a system, the system comprising an AI Agent (123); an Application Client (102); an Authorization Server (125); and a Resource Server (131), wherein during the Authorization Code Flow, wherein:
the Authorization Server (125) optionally receives a User registration request from the Application Client (102) to register (201) itself in a Know Your Customer (KYC) context;
the Authorization Server (125) receives an Agent registration request from the User to register (201) the User in a Know Your Agent (KYA) context,
whereby the Authorization Server (125) binds a User Identity (122) to the Al Agent (123) that delegates responsibilities from the User to the AI Agent (123);
the Authorization Server (125) creates an Al ID Token (240) for the AI Agent (123) and a corresponding Delegation Token (242) responsive to a Front Channel (FC) redirect from the Application Client (102) containing a hashed code verifier (PKCE), a client ID, and a "response_type";
the Authorization Server (125) issues a Front Channel (FC) redirection request to the Application Client (102) that includes the Al ID Token (240) , the Delegation Token (242), and an authorization code;
the Authorization Server (125) receives from the Application Client (102) a Back Channel (BC) request with a code verifier (PKCE), a client ID, a client secret, and the authorization code) and authenticates from this request the Application Client (102)
the Authorization Server (125) verifies the authorization code, the code verifier (PKCE), and link with the Client ID from the Delegation Token;
the Authorization Server (125) issues a Back Channel (BC) response with an Access Token and a Refresh Token to the Application Client (102),
whereby the Application Client (102) thereafter uses the Access Token to access protected resources from the Resource Server (131).

9. The Authorization Server (125) of claim 8, wherein the Authorization Server (125) transforms AI Agent information and user delegations into the Delegation Token.

10. The Authorization Server (125) of claim 9, wherein the Authorization Server (125) interprets scopes for the "response_type" to accommodate the AI agent ID and Delegation Token.

11. The Authorization Server (125) of claim 10, wherein for a response_type of "code AI_ID_Token",
the Authorization Server (125) responds (211) to the Application Client 102 over the Forward Channel (FC) with a redirect including the Al_ID_Token, Delegation Token, and authorization code,
wherein the Delegation Token is a signed data blob, such asa JWT, containing property-value pairs (240);
the Application Client 102 sends (212) to the Authorization Server (131) over a Background Channel (BC) request containing the code verifier (PKCE), the client ID, client secret, and authorization code;
the Authorization Server (131) authenticates the Application Client (102) based on the client ID and client secret, and then verifies the authorization code, the code verifier (PKCE) and link with the client ID,
whereby the Delegation Token (240) includes a link to the user (owner) which it compares against the received client ID of the Application Client 102; and
the Authorization Server (125), upon verification of the authorization code, sends (215) the Access Token and Refresh Token via a Back Channel (BC) request to the Application Client 102; wherein after
the Application Client (102) presents the Access Token to the Resource Server (131),
which returns (217) the protected resources back to the the Application Client (102).

12. The Authorization Server (125) of claim 10, wherein for a response_type of "code ID_Token Al_I D_Token",
the Authorization Server (125) responds (221) to the Application Client (102) over the Forward Channel (FC) with a redirect including the Al_ID_Token, ID_Token, Delegation Token, and authorization code,
wherein the Delegation Token is a signed data blob, such as a JWT containing property-value pairs (250);
. the Application Client (102) sends (222) to the Authorization Server (131) over a Background Channel (BC) request containing the code verifier (PKCE), the client ID, client secret, and authorization code;
the Authorization Server (131) authenticates the Application Client (102) based on the client ID and client secret, and then verifies the authorization code, the code verifier (PKCE) and link with the client ID,
whereby the Delegation Token (250) includes a link to the user (owner) which it compares against the received client ID of the Application Client (102); and
the Authorization Server 125, upon verification of the authorization code, sends (225) the Access Token and Refresh Token via a Back Channel (BC) request to the Application Client 102; wherein after,
the Application Client (102) presents the Access Token to the Resource Server (131), which returns (227) the protected resources back to the the Application Client (102).

13. The Authorization Server (125) of claim 6, wherein the Authorization Code Flow is OAuth 2.0.

14. The Authorization Server (125) of claim 6, wherein the Authorization Code Flow is OAuth 2.0 with PKCE extension for hybrid flow.
